# EUROPEAN PATENT APPLICATION

(11) **EP 4 224 614 A1**
(43) Date of publication of application: **09.08.2023**
(21) Application number: 22870317.9
(22) Date of filing: 15.09.2022
(51) Int. Cl.: H01M 50/449, H01M 50/446, H01M 50/403, H01M 10/052

(54) **SEPARATOR COMPRISING INORGANIC MATERIAL OF CORE-SHELL STRUCTURE AND METHOD FOR MANUFACTURING SAME**

(30) Priority: 17.09.2021 KR 20210124468
(71) Applicant: LG Energy Solution, Ltd., Seoul 07335 (KR)
(72) Inventor: LEE, Ji Su, Daejeon 34122 (KR); SUNG, In Hyouk, Daejeon 34122 (KR); KA, Kyung Ryun, Daejeon 34122 (KR)
(74) Representative: Hoffmann Eitle
(86) International application number: PCT/KR2022/013803
(87) International publication number: WO 2023/043233

(57) **Abstract**

The present invention relates to a separator including a separator substrate having a porous structure; and a coating layer formed on at least one surface of the separator substrate, wherein the coating layer includes a surface-modified inorganic material having a core-shell structure in which a polymer is bonded to a surface of an inorganic particle.

## Description

### [Technical Field]

This application claims the benefit of priority to Korean Patent Application No. 2021-0124468 filed on September 17, 2021, the disclosure of which is incorporated herein by reference in its entirety.

The present invention relates to a separator including an inorganic material having a core-shell structure. More particularly, the present invention relates to a separator including an inorganic material having a core-shell structure in which a polymer is bonded to a surface of an inorganic particle included in a separator coating layer and a method of manufacturing the same.

### [Background Art]

For a lithium secondary battery, a separator is interposed between a positive electrode and a negative electrode in order to prevent short circuit due to contact between the positive electrode and a negative electrode. Heat is generated in the lithium secondary battery during normal charging and discharging thereof, and short circuit may occur between the positive electrode and a negative electrode due to external impact, etc. In order to improve heat resistance of the separator, therefore, a structure in which a coating layer including an inorganic material is added to an outer surface of a separator substrate having a porous structure may be used.

As ingredients of the coating layer, an inorganic material and a polymer may be selectively used depending on the function provided to the separator.

In general, for the lithium secondary battery, when moisture is present in a battery cell, gas may be generated due to decomposition reaction of an electrolyte, whereby the lifespan of the battery cell is reduced and the performance of the battery cell is degraded.

If a material having hygroscopicity is used as the inorganic material constituting the coating layer of the separator, therefore, the moisture content in the separator is increased, whereby the above problem may occur.

In connection therewith, Patent Document 1 discloses a separator configured such that particles are included in an active layer formed on one surface or opposite surfaces of a porous substrate by coating, wherein each of the particles has a core-shell structure in which an inorganic particle constitutes a core and a decomposable polymer formed on a surface of the core by coating constitutes a shell.

The separator of Patent Document 1 includes a particle having a structure in which a decomposable polymer is formed on a surface of an inorganic particle by coating, wherein the thickness of the separator is reduced by the decomposed thickness of the polymer, whereby a thickness increase problem due to swelling is solved.

Patent Document 2 discloses a microcapsule for electrochemical devices including a capsule film enclosing a surface of a metal hydroxide particle, wherein the capsule film includes a flame-retardant resin.

In Patent Document 2, a metal hydroxide particle having a capsule film including a flame-retardant resin formed thereon is used, whereby it is possible to provide a separator having improved flame retardancy.

However, a separator for secondary batteries capable of inhibiting the generation of gas due to moisture present in a battery cell and preventing degradation in performance of a battery through the use of an inorganic material having low hygroscopicity has not yet been suggested.

### (Prior Art Documents)

### (Patent Documents)

Korean Patent Application Publication No. 2017-0071204 (2017.06.23)
Korean Patent Application Publication No. 2019-0130977 (2019.11.25)

### [Disclosure]

### [Technical Problem]

The present invention has been made in view of the above problems, and it is an object of the present invention to provide a separator including an inorganic material having a core-shell structure in which a polymer is bonded to a surface of an inorganic particle having hygroscopicity such that the surface of the inorganic particle is modified, thereby inhibiting generation of moisture.

### [Technical Solution]

A separator according to the present invention to accomplish the above object includes a separator substrate having a porous structure and a coating layer formed on at least one surface of the separator substrate, wherein the coating layer includes a surface-modified inorganic material having a core-shell structure in which a polymer is bonded to a surface of an inorganic particle.

The core-shell structure may be formed by a functional group present on the surface of the inorganic particle constituting a core being bonded to the polymer.

The core-shell structure may include the inorganic particle constituting a core and the polymer at the surface of the inorganic particle are bonded to each other via a coupling agent.

The inorganic material may be at least one selected from the group consisting of Al(OH)₃, AlOOH, Mg(OH)₂, Al₂O₃, SiO₂, TiO₂, ZrO₂, BaTiO₃, BaSO₄, Pb(Zr, Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, and SiC.

The coupling agent may be a silane-containing coupling agent including amino silane, epoxy silane, methacryloxy silane, vinyl silane, chlorine silane, or mercapto silane.

The coupling agent may substitute for the surface of the inorganic particle, and the coupling agent may react with a functional group of the polymer to form a bond.

The polymer may include a hydroxyl group (-OH), an amino group (-NH₂), a carboxyl group (-COOH), or a thiol group (-SH).

The surface-modified inorganic material may have a moisture content of 1,500 ppm or less.

A method of manufacturing the separator includes (a) manufacturing a surface-modified inorganic material having a core-shell structure in which a polymer is bonded to a surface of an inorganic particle, (b) mixing the surface-modified inorganic material with a binder to manufacture a separator coating slurry, and (c) coating opposite surfaces of a separator substrate with the separator coating slurry.

Step (a) may include a process of reacting the inorganic particle with a coupling agent, adding the polymer to the coupling agent, and reacting the polymer and the coupling agent with each other.

The present invention provides a lithium secondary battery having an electrode assembly including the separator mounted in a battery case.

In addition, the present invention may provide various combinations of the above solving means.

### [Advantageous Effects]

As is apparent from the above description, in a separator according to the present invention, a polymer is bonded to a surface of an inorganic particle or a coupling agent bonded to the inorganic particle is bonded to the polymer to form an inorganic material having a core-shell structure in which the surface of the inorganic particle is modified.

Even though an inorganic particle having high hygroscopicity is used, therefore, it is possible to inhibit formation of moisture or adsorption of moisture by the inorganic particle after being decomposed.

In addition, it is possible to prevent degradation in performance of a battery cell due to moisture generated in the battery cell.

### [Description of Drawings]

FIG. 1 is a view showing a process of manufacturing an inorganic material according to a first embodiment.
FIG. 2 is a view showing a process of manufacturing an inorganic material according to a first embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

A separator according to the present invention includes a separator substrate having a porous structure and a coating layer formed on at least one surface of the separator substrate, wherein the coating layer includes a surface-modified inorganic material having a core-shell structure in which a polymer is bonded to a surface of an inorganic particle.

When the inorganic particle has a property of easily adsorbing moisture present in the air, e.g. when the inorganic particle includes a hydroxyl group on a surface thereof, moisture may be formed in a battery cell. The moisture that exists in the battery cell reacts with electrolyte salt to generate gas while decomposing an electrolytic solution. Resistance is increased by an electrode film formed by such a reaction by-product.

In addition, not only does the gas increase contact resistance between a positive electrode and the separator and between a negative electrode and the separator but also a gas trap may be formed on each of a surface of the negative electrode and a surface of the positive electrode. Since resistance of the part of the surface of the negative electrode on which the gas trap is generated is increased, lithium may be precipitated during charging, whereby capacity loss may occur. There is no capacity revelation at the part of the surface of the negative electrode on which the gas trap is generated.

Furthermore, side reaction, such as electrolyte decomposition and lithium precipitation, continuously occur as charging and discharging cycles are performed, whereby resistance is gradually increased while a capacity retention rate is gradually decreased.

When an inorganic material having a core-shell structure in which a polymer is bonded to a surface of an inorganic particle is used, as in the present invention, however, it is possible to prevent adsorption of moisture by the inorganic particle due to modification of the surface of the inorganic particle, and therefore it is possible to prevent the above problem.

The separator substrate, which is an insulative thin film that exhibits high ionic transmittance and mechanical strength, may be a polyolefin-based separator commonly used in the art to which the present invention pertains. For example, the separator substrate may be made of at least one selected from the group consisting of high-density polyethylene, low-density polyethylene, linear low-density polyethylene, ultrahigh molecular weight polyethylene, polypropylene, polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene, and a mixture thereof.

The coating layer includes a surface-modified inorganic material and a binder configured to maintain bonding between the surface-modified inorganic materials and to increase the force of adhesion between the electrode and the separator.

The surface-modified inorganic material, which has a structure in which a polymer is bonded to a surface of an inorganic particle, may have a core-shell structure in which the inorganic particle constitutes a core and the polymer constitutes a shell.

As an inorganic material according to a first embodiment, an inorganic material having a core-shell structure in which a functional group on a surface of an inorganic particle and a polymer react with each other to form a bond, whereby the surface of the inorganic particle is modified, may be formed. For example, when a metal hydroxide including a hydroxyl group on a surface thereof is used as an inorganic particle, a core-shell structure may be formed, since the hydroxyl group is bonded to a polymer including a hydroxyl group (-OH), an amino group (-NH₂), a carboxyl group (-COOH), or a thiol group (-SH).

As an inorganic material according to a second embodiment, an inorganic material having a core-shell structure in which a functional group on a surface of an inorganic particle and a coupling agent are bonded to each other and a polymer is bonded to the coupling agent bonded to the inorganic particle, whereby the surface of the inorganic particle is modified, may be formed. For example, when an epoxy silane coupling agent is used, a silane-side distal end of the coupling agent may be bonded to an inorganic particle, and a polymer may be bonded to an epoxyside distal end of the coupling agent, whereby a core-shell structure may be formed.

In this case, the inorganic particle is formed as a core, the polymer constitutes a shell, and the coupling agent becomes a means configured to connect the inorganic particle and the polymer to each other.

Meanwhile, when the functional group on the surface of the inorganic particle reacts with the polymer or the coupling agent to form a bond, whereby an inorganic material having a core-shell structure is formed, as in the inorganic material according to the present invention, bonding reaction occurs on the surface of the inorganic particle, whereby the core-shell structure may be stably formed.

When a polymer resin is merely formed on a surface of an inorganic particle by coating, whereby a core-shell structure is formed, however, the polymer resin is not bonded to the inorganic particle on the surface of the inorganic particle. When coating is not properly performed, therefore, no polymer resin is present on the surface of the inorganic particle, and the polymer resin and the inorganic particle may separately exist. In this case, the modification rate of the surface of the inorganic particle is low, whereby the moisture formation inhibition effect by the inorganic particle is lowered.

The inorganic particle is not particularly restricted as long as the inorganic particle is generally used when a separator coating layer for secondary batteries is manufactured, and is also not particularly restricted as long as the inorganic particle is electrochemically stable. That is, the inorganic particle usable in the present invention is not particularly restricted as long as the inorganic particle does not undergo oxidation and/or reduction within an operation voltage range (e.g. 0 V to 5 V based on Li/Li+) of an electrochemical device to which the present invention is applied. Particularly, when an inorganic particle having high permittivity is used as the inorganic particle, the degree of dissociation of electrolyte salt, e.g. lithium salt, in a liquid electrolyte may be increased, whereby ionic conductivity of the electrolytic solution may be improved.

It is preferable for a high-permittivity inorganic particle having a permittivity constant of 5 or more, preferably 10 or more, to be included as the inorganic particle. As an example of an inorganic particle having a permittivity constant of 5 or more, at least one selected from the group consisting of Al(OH)₃, AlOOH, Mg(OH)₂, Al₂O₃, SiO₂, TiO₂, ZrO₂, BaTiO₃, BaSO₄, Pb (Zr, Ti)O₃ (PZT), Pb₁₋ₓLaₓZr_{1-y}Ti_{y}O₃ (PLZT, 0<x<1, 0<y<1), Pb(Mg_{1/3}Nb_{2/3}) O₃-PbTiO₃ (PMN-PT), hafnia (HfO₂), SrTiO₃, SnO₂, CeO₂, MgO, NiO, CaO, ZnO, and SiC may be used.

In addition, an inorganic particle having lithium ion transfer ability, i.e. an inorganic material that contains a lithium element but has a function of moving lithium ions without storage of lithium, may be used as the inorganic particle. As a non-limiting example of the inorganic material having lithium ion transfer ability, at least one selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), such as Li_{3.25}Ge₀.₂₅P_{0.75}S₄, lithium nitride (LiₓN_{y}, 0<x<4, 0<y<2), such as Li₃N, SiS₂-based glass (LiₓSi_{y}S_{z}, 0<x<3, 0<y<2, 0<z<4), such as Li₃PO₄-Li₂S-SiS₂, P₂S₅-based glass (LiₓP_{y}S_{z}, 0<x<3, 0<y<3, 0<z<7), such as LiI-Li₂S-P₂S₅, and a mixture thereof may be used; however, the present invention is not limited thereto.

Meanwhile, in an embodiment of the present invention, the inorganic coating layer may include an endothermic material as the inorganic particle. The endothermic material may absorb heat generated due to abnormal operation of the battery, thereby improving safety. As an example of the endothermic material, an oxide or a hydroxide including one or more selected form the group consisting of aluminum, magnesium, silicon, zirconium, calcium, strontium, barium, antimony, tin, zinc, and a rare earth element may be used; however, the present invention is not limited thereto. More specifically, alumina, aluminum peroxide, tin-zinc oxide (Zn₂SnO₄ or ZnSnO₃), antimony trioxide (Sb₂O₃), antimony tetroxide (Sb₂O₄), or antimony pentoxide (Sb₂O₃) may be used as the metal oxide, and aluminum hydroxide (Al(OH)₃), magnesium hydroxide (Mg(OH)₂), or zinc-tin hydroxide (ZnSn(OH)₆) may be used as the metal hydroxide.

When the inorganic particle having the above features is used as an ingredient of the coating layer, direct contact between the positive electrode and the negative electrode may be prevented by the coating layer formed on the separator by coating even though internal short circuit occurs between the positive electrode and the negative electrode due to an external impact applied, for example, by a needle-shape conductor. In addition, when exposed to a high temperature, the coating layer in which the inorganic particle is packed may prevent shrinkage of the separator substrate.

The kind of the binder is not particularly restricted as long as the binder does not chemically change the coating layer of the separator. For example, the binder may be made of polyolefin, such as polyethylene or polypropylene; a fluorine-containing resin, such as polyvinylidene fluoride or polytetrafluoroethylene; fluorine-containing rubber, such as a vinylidene fluoride-hexafluoropropylenetetrafluoroethylene copolymer or an ethylenetetrafluoroethylene copolymer; a styrene-butadiene copolymer or a hydride thereof; a (meth)acrylic acid ester copolymer, such as a methacrylic acid ester copolymer, an acrylonitrile acrylic acid ester copolymer, or a styrene acrylic acid ester copolymer; rubber, such as ethylene propylene rubber; polyvinyl acetate; a resin having a melting point or a glass transition temperature of 180°C or higher, such as polyphenylene ether, polysulfone, polyethersulfone, polyphenylene sulfide, polyetherimide, polyamide, polyimide, polyamide imide, polyetheramide, polyester, aromatic polyester, or polyetheretherketone; polycarbonate; polyacetal; a water soluble resin, such as carboxyalkyl cellulose, alkyl cellulose, hydroxyalkyl cellulose, starch, polyvinyl alcohol, sodium alginate, polyethylene glycol, cellulose ester, polyacrylic acid, polyacrylate, polyacrylic amide, or polymethacrylic acid; or a copolymer including two or more thereof.

The coupling agent may be a silane-based coupling agent including amino silane, epoxy silane, methacryloxy silane, vinyl silane, chlorine silane, or mercapto silane. Specifically, the epoxy silane includes, for example, diethoxy(3-glycidyloxypropyl)methylsilane.

The polymer may include a hydroxyl group (-OH), an amino group (-NH₂), a carboxyl group (-COOH), or a thiol group (-SH). The kind of the polymer is not particularly restricted as long as the polymer does not chemically change the coating layer of the separator. For example, the polymer may be polyolefin, such as polyethylene or polypropylene; a fluorine-containing resin, such as polyvinylidene fluoride or polytetrafluoroethylene; fluorine-containing rubber, such as a vinylidene fluoride-hexafluoropropylenetetrafluoroethylene copolymer or an ethylenetetrafluoroethylene copolymer; a styrene-butadiene copolymer or a hydride thereof; a (meth)acrylic acid ester copolymer, such as a methacrylic acid ester copolymer, an acrylonitrile acrylic acid ester copolymer, or a styrene acrylic acid ester copolymer; rubber, such as ethylene propylene rubber; polyvinyl acetate; a resin having a melting point or a glass transition temperature of 180°C or higher, such as polyphenylene ether, polysulfone, polyethersulfone, polyphenylene sulfide, polyetherimide, polyamide, polyimide, polyamide imide, polyetheramide, polyester, aromatic polyester, or polyetheretherketone; polycarbonate; polyacetal; a water soluble resin, such as carboxyalkyl cellulose, alkyl cellulose, hydroxyalkyl cellulose, starch, polyvinyl alcohol, sodium alginate, polyethylene glycol, cellulose ester, polyacrylic acid, polyacrylate, polyacrylic amide, or polymethacrylic acid; or a copolymer including two or more thereof. The polymer may be substituted with at least some of a hydroxyl group (-OH), an amino group (-NH₂), a carboxyl group (-COOH), or a thiol group (-SH).

The mass average molecular weight of the polymer may be 1,000 g/mol to 5,000,000 g/mol.

In a concrete example, when an inorganic particle made of a metal hydroxide, a silane coupling agent having an epoxy group, and the polymer are stirred together at a high temperature, a hydroxyl group on a surface of the inorganic particle and the silane coupling agent may react with each other, whereby the surface of the inorganic material may be epoxidized, and the epoxy group of the silane coupling agent bonded to the surface of the inorganic material may react with a hydroxyl group, an amino group, a carboxyl group, or a thiol group present at a distal end of the polymer, whereby the silane coupling agent and the polymer may be bonded to each other.

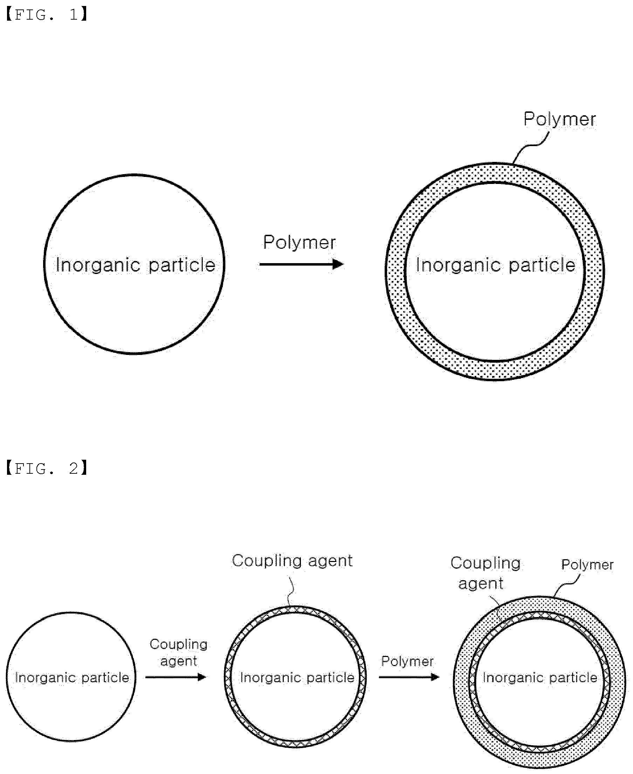

As the result of such reaction, FIG. 1 shows a process of manufacturing an inorganic material according to a first embodiment.

Referring to FIG. 1, the inorganic material is shown as having a core-shell structure in which a polymer is bonded to a surface of an inorganic particle.

That is, when a metal hydroxide is used as the inorganic material according to the first embodiment, a hydroxyl group present on a surface thereof is bonded to the polymer. Even though there is no coupling agent, therefore, it is possible to form an inorganic material having a core-shell structure in which a polymer is bonded to the vicinity of an inorganic particle, whereby a surface of the inorganic particle may be modified.

FIG. 2 shows a process of manufacturing an inorganic material according to a second embodiment.

Referring to FIG. 2, the inorganic material is shown as having a core-shell structure in which a coupling agent is bonded to a surface of an inorganic particle and a polymer is bonded to the coupling agent bonded to the inorganic particle. That is, the inorganic material according to the second embodiment is configured to have a structure in which the inorganic particle constituting a core and the polymer constituting a shell are bonded to each other via the coupling agent.

In order to manufacture a separator according to the present invention, a method of manufacturing the separator includes (a) a step of manufacturing a surface-modified inorganic material having a core-shell structure in which a polymer is bonded to a surface of an inorganic particle, (b) a step of mixing the surface-modified inorganic material with a binder to manufacture a separator coating slurry, and (c) a step of coating opposite surfaces of a separator substrate with the separator coating slurry.

Step (a) may include a process of reacting the inorganic particle with a coupling agent, adding the polymer to the coupling agent, and reacting the polymer and the coupling agent with each other.

When reaction between the inorganic particle and the coupling agent is performed first in step (a), as described above, the modification rate of the surface of the inorganic particle may be increased through bonding between the inorganic particle and the coupling agent. Even though an inorganic particle having hygroscopicity is used, therefore, it is possible to prevent formation of moisture and to improve the gas generation reduction effect.

The reaction temperature in step (a) may be 25°C to 200°C.

When the reaction temperature in step (a) is high, reaction between the inorganic particle and the coupling agent and between the coupling agent and the polymer is actively performed, whereby the surface modification rate of the inorganic material having the core-shell structure may be increased. The reaction temperature may be, for example, 25°C to 200°C, specifically 60°C to 80°C, although the reaction temperature may be changed depending on the kind of a solvent that is used.

A step of filtering and drying the surface-modified inorganic material manufactured in step (a) may be further included.

The moisture content of the surface-modified inorganic material manufactured in step (a) may be 1,500 ppm or less.

When a separator is manufactured using the above method, therefore, it is possible to manufacture a separator having a remarkably reduced moisture content, whereby it is possible to inhibit the generation of gas due to reaction between moisture and an electrolytic solution.

It is possible to manufacture a lithium secondary battery having an electrode assembly including the separator mounted in a battery case, and the electrode assembly may be a stacked type electrode assembly, in which at least one positive electrode and at least one negative electrode are stacked in the state in which a separator is interposed therebetween, a stacked and folded type electrode assembly, in which stacked type unit cells, each of which includes a positive electrode and a negative electrode, are wound using a separation sheet, a laminated and stacked electrode assembly, in which stacked type unit cells, each of which includes a positive electrode and a negative electrode, are stacked in the state in which a separator is interposed therebetween, or a wound type electrode assembly, in which a single positive electrode and a single negative electrode are wound in the state in which a separator is interposed therebetween.

For example, the positive electrode may be manufactured by applying a positive electrode mixture including a positive electrode active material to a positive electrode current collector and drying the positive electrode mixture. The positive electrode mixture may further optionally include a binder, a conductive agent, and a filler, as needed.

In general, the positive electrode current collector is manufactured so as to have a thickness of 3 um to 500 um. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesive force of the positive electrode active material. The positive electrode current collector may be configured in any of various forms, such as a film, a sheet, a foil, a net, a porous body, a foam body, and a non-woven fabric body.

The positive electrode active material, which is a material that is capable of inducing an electrochemical reaction, may be a lithium transition metal oxide including two or more transition metals. For example, the positive electrode active material may be, but is not limited to, a layered compound, such as a lithium cobalt oxide (LiCoO₂) or a lithium nickel oxide (LiNiO₂) substituted with one or more transition metals; a lithium manganese oxide substituted with one or more transition metals; a lithium nickel-based oxide represented by the chemical formula LiNi_{1-y}M_{y}O₂ (where M = Co, Mn, Al, Cu, Fe, Mg, B, Cr, Zn, or Ga, at least one of which is included, and 0.01≤y≤0.8); a lithium nickel cobalt manganese composite oxide represented by the chemical formula Li_{1+z}Ni_{b}Mn_{c}Co₁₋(_{b+c+d})M_{d}O₍₂₋ₑ)Aₑ (where -0.5≤z≤0.5, 0.1≤b≤0.8, 0.1≤c≤0.8, 0≤d≤0.2, 0≤e≤0.2, b+c+d<1, M = Al, Mg, Cr, Ti, Si, or Y, and A = F, P, or Cl), such as Li_{1+z}Ni_{1/3}Co_{1/3}Mn_{1/3}O₂ or Li_{1+z}Ni_{0.4}Mn_{0.4}Co_{0.2}O₂; or olivine-based lithium metal phosphate represented by the chemical formula Li₁₊ₓM_{1-y}M'_{y}PO_{4-z}X_{z} (where M = a transition metal, preferably Fe, Mn, Co, or Ni, M' = Al, Mg, or Ti, X = F, S, or N, -0.5≤x≤0.5, 0≤y≤0.5, and 0≤z≤0.1).

The conductive agent is generally added so that the conductive agent accounts for 1 weight% to 30 weight% based on the total weight of the mixture including the positive electrode active material. The conductive agent is not particularly restricted, as long as the conductive agent exhibits high conductivity without inducing any chemical change in a battery to which the conductive agent is applied. For example, graphite, such as natural graphite or artificial graphite; carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the active material and the conductive agent and in binding with the current collector. The binder is generally added in an amount of 1 weight% to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylenepropylene-diene terpolymer, styrene butadiene rubber, fluoro rubber, and various copolymers.

The filler is an optional component used to inhibit expansion of the electrode. There is no particular limit to the filler as long as the filler is made of a fibrous material while the filler does not cause chemical changes in a battery to which the filler is applied. As examples of the filler, there may be used olefin-based polymers, such as polyethylene and polypropylene; and fibrous materials, such as glass fiber and carbon fiber.

For example, the negative electrode may be manufactured by applying a negative electrode mixture including a negative electrode active material to a negative electrode current collector and drying the negative electrode mixture. The negative electrode mixture may include the above-described components, i.e. the conductive agent, the binder, and the filler, as needed.

The negative electrode current collector is generally manufactured so as to have a thickness of 3 um to 500 um. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector. The negative electrode current collector may be configured in any of various forms, such as a film, a sheet, a foil, a net, a porous body, a foam body, and a non-woven fabric body.

As the negative electrode active material, for example, there may be used silicon; a carbon-based material, such as artificial graphite, natural graphite, amorphous hard carbon, or low crystalline soft carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8), or lithium titanium oxide; lithium metal; a lithium alloy; a silicon-based alloy; a tin-based alloy; a metal oxide, such as Sn, SnO, SnO₂, PbO, PbO₂, Pb₂O₃, Pb₃O₄, Sb₂O₃, Sb₂O₄, Sb₂O₃, GeO, GeO₂, Bi₂O₃, Bi₂O₄, or Bi₂O₅; a conductive polymer, such as polyacetylene; or a Li-Co-Ni based material.

Hereinafter, the present invention will be described with reference to examples. These examples are provided only for easier understanding of the present invention and should not be construed as limiting the scope of the present invention.

### <Example 1>

Al(OH)₃, as an inorganic particle, diethoxy(3-glycidyloxypropyl)methylsilane, as a coupling agent, and polyvinylidene fluoride (PVDF) substituted with a carboxyl group, as a polymer, were introduced into a stirrer in a weight ratio of 9:1:2, and were stirred at 1,000 rpm for 24 hours at a temperature of 60°C.

The solution thus stirred was separated using filter paper and dried to manufacture Al(OH)₃ having a core-shell structure in which Al(OH)₃ constitutes a core, the polyvinylidene fluoride substituted with the carboxyl group constitutes a shell, and connection therebetween is performed via the coupling agent.

### <Example 2>

A surface-modified inorganic material was manufacture using the same method as in Example 1 except that Al(OH)₃, as an inorganic particle, and diethoxy(3-glycidyloxypropyl)methylsilane, as a coupling agent, were introduced into a stirrer and stirred at 1,000 rpm for 24 hours at 60°C, and polyvinylidene fluoride (PVDF) substituted with a carboxyl group, as a polymer, was further introduced into the stirrer and stirred at 1,000 rpm for 24 hours at 60°C, unlike Example 1.

### <Example 3>

Al(OH)₃ and polyvinylidene fluoride (PVDF) substituted with a carboxyl group, as a polymer, were used without a coupling agent to manufacture Al(OH)₃ having a core-shell structure in which Al(OH)₃ constitutes a core and the polyvinylidene fluoride substituted with the carboxyl group constitutes a shell, unlike Example 1.

### <Comparative Example 1>

Unprocessed Al(OH)₃ was prepared.

### <Measurement of moisture>

0.2 g of each of the inorganic materials manufactured according to Examples 1 to 3 and Comparative Example 1 was sampled, and the amount of moisture was measured using a moisture measuring instrument (831 Coulometer, Metrohm) under the conditions of 120°C, 300 seconds, and an N₂ flow rate of 60 ml/min. The amount of moisture thus measured is shown in the following table.

### <Measurement of amount of generated gas>

16 g of each of the inorganic materials manufactured according to Examples 1 to 3 and Comparative Example 1 and 15.4 ml of an electrolytic solution including 1M of LiPF₆ and ethylene carbonate and ethyl methyl carbonate mixed in a volume ratio of 3:7 were introduced into an aluminum pouch. The aluminum pouch was sealed under vacuum and was stored in a convection oven of 60°C for 7 days.

Subsequently, the amount of gas generated in the aluminum pouch was measured using a volume measuring instrument (TWD-150DM, Matsuhaku), and the result is shown Table 1 below.

**[Table 1]**

| | Moisture amount (ppm) | Gas generation amount (ml) |
|---|---|---|
| Example 1 | 796 | 15 |
| Example 2 | 628 | 12 |
| Example 3 | 1,022 | 76 |
| Comparative Example 1 | 1,896 | 110 |

Referring to Table 1 above, it can be seen that the moisture amounts of the inorganic materials according to Example 1 and Example 2 are respectively about 42% and about 33% of the moisture amount of the unprocessed inorganic material according to Comparative Example 1, and therefore the moisture amounts are reduced by about 58% and 67%. In addition, it can be seen that the gas generation amounts of the inorganic materials according to Example 1 and Example 2 are respectively about 14% and about 11% of the gas generation amount of the inorganic material according to Comparative Example 1.

In addition, for Example 3 having the core-shell structure without the coupling agent, the moisture amount was reduced to about 46% of the moisture amount of Comparative Example 1, and the gas generation amount was reduced to about 31% of the gas generation amount of Comparative Example 1.

Referring to Example 1 to Example 3, each of Example 1 and Example 2 has a high surface modification rate of the inorganic particle, since the inorganic particle and the coupling agent react with each other on the surface of the inorganic particle. Consequently, generation of moisture due to the inorganic particle is lowered, and the gas generation amount is remarkably reduced.

In addition, the coupling agent bonded to the surface of the inorganic particle is bonded to the polymer introduced later to form an inorganic material having a core-shell structure. In order to set or control physical properties of a desired inorganic material, therefore, the kind of the polymer bonded to the surface of the inorganic material may be selectively applied.

When a separator is manufactured using the inorganic material according to the present invention, as described above, moisture adsorption is lowered, whereby it is possible to manufacture a separator having a small moisture amount.

In addition, since the gas generation amount is remarkably reduced, it is possible to increase the capacity retention rate of a battery and to inhibit the resistance increase rate of the battery.

Those skilled in the art to which the present invention pertains will appreciate that various applications and modifications are possible within the category of the present invention based on the above description.

## Claims

1. A separator comprising:
a separator substrate having a porous structure; and
a coating layer formed on at least one surface of the separator substrate, wherein
the coating layer comprises a surface-modified inorganic material having a core-shell structure in which a polymer is bonded to a surface of an inorganic particle.

2. The separator according to claim 1, wherein the core-shell structure is formed by a functional group present on the surface of the inorganic particle constituting a core being bonded to the polymer.

3. The separator according to claim 1, wherein the core-shell structure comprises the inorganic particle constituting a core and the polymer at the surface of the inorganic particle are bonded to each other via a coupling agent.

4. The separator according to claim 1, wherein the inorganic material is at least one selected from a group consisting of Al(OH)₃, AlOOH, Mg(OH)₂, Al₂O₃, SiO₂, TiO₂, ZrO₂, BaTiO₃, BaSO₄, Pb(Zr, Ti)O₃ (PZT), Pb₁₋ₓLaₓZr_{1-y}Ti_{y}O₃ (PLZT, 0<x<1, 0<y<1), Pb (Mg_{1/3}Nb_{2/3}) O₃-PbTiO₃ (PMN-PT), hafnia (HfO₂), SrTiO₃, SnO₂, CeO₂, MgO, NiO, CaO, ZnO, and SiC.

5. The separator according to claim 1, wherein the coupling agent is a silane-containing coupling agent comprising amino silane, epoxy silane, methacryloxy silane, vinyl silane, chlorine silane, or mercapto silane.

6. The separator according to claim 1, wherein the coupling agent substitutes for the surface of the inorganic particle, and the coupling agent reacts with a functional group of the polymer to form a bond.

7. The separator according to claim 1, wherein the polymer comprises a hydroxyl group (-OH), an amino group (-NH₂), a carboxyl group (-COOH), or a thiol group (-SH).

8. The separator according to claim 1, wherein the surface-modified inorganic material has a moisture content of 1,500 ppm or less.

9. A method of manufacturing the separator according to any one of claims 1 to 8, the method comprising:
(a) manufacturing a surface-modified inorganic material having a core-shell structure in which a polymer is bonded to a surface of an inorganic particle;
(b) mixing the surface-modified inorganic material with a binder to manufacture a separator coating slurry; and
(c) coating opposite surfaces of a separator substrate with the separator coating slurry.

10. The method according to claim 9, wherein step (a) comprises a process of reacting the inorganic particle with a coupling agent, adding the polymer to the coupling agent, and reacting the polymer and the coupling agent with each other.

11. A lithium secondary battery having an electrode assembly comprising the separator according to any one of claims 1 to 8 mounted in a battery case.
